Europäisches Patentamt

European Patent Office

Office européen des brevets

(11) Veröffentlichungsnummer: **0 207 276**

**A2**

## (12) EUROPÄISCHE PATENTANMELDUNG

(21) Anmeldenummer: 86106911.0

(22) Anmeldetag: 21.05.86

(51) Int. Cl.4: **G02B 6/38** , C03B 37/14

(30) Priorität: 28.06.85 DE 3523295

(43) Veröffentlichungstag der Anmeldung:
07.01.87 Patentblatt 87/02

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Holbe, Erhard, Dipl.-Ing.**
**Saarbrückerstrasse 14**
**D-8000 München 70(DE)**

(54) Verfahren zum festen Verbinden zweier Lichtleiter.

(57) Auf die aneinanderstoßenden Lichtleiterenden - (1) wird eine Hülse (3) aus niedrigschmelzendem Glas aufgeschoben. Diese wird auf ihre Erweichungstemperatur erwärmt und so weit gestreckt, daß sie sich eng an die beiden Lichtleiterenden (1) anlegt. Beim Abkühlen verringert sich der Durchmesser der Hülse noch mehr, so daß sich eine feste, genau zentrierte Verbindung ergibt.

FIG 2

EP 0 207 276 A2

## Verfahren zum festen Verbinden zweier Lichtleiter

Die Erfindung bezieht sich auf ein Verfahren zum festen Verbinden zweier zueinander fluchtender Lichtleiterenden. Es ist bekannt, eine Spleißverbindung zweier Lichtleiter herzustellen, indem man deren beide Enden miteinander verschweißt. Dazu bedarf es eines erheblichen Vorrichtungsaufwandes insbesondere, als die beiden Lichtleiterenden unter dem Mikroskop gegeneinander ausgerichtet werden müssen, bevor sie z.B. mittels einer Laserschweißeinrichtung miteinander verbunden werden können. Der Einsatz derartiger Einrichtungen erfordert z.B. bei der Verbindung von Erdkabeln einen erheblichen Raumbedarf, so daß in den Verbindungsmuffen eine große Leitungsreserve vorhanden sein muß, um die beiden miteinander zu verbindenden Kabel in die Spleißvorrichtung einbringen zu können.

Der Erfindung liegt die Aufgabe zugrunde, die Herstellung der Verbindung zu erleichtern.

Diese Aufgabe wird durch die Erfindung gemäß Patentanspruch 1 gelöst. Nachdem die beiden Lichtleiterenden in die röhrchenförmige Hülse lose eingeschoben sind, wird zunächst die Hülse im Bereich der Stoßstelle erwärmt und danach in Längsrichtung gestreckt. Dadurch legt sich die Hülse eng an die beiden Lichtleiterenden an und zentriert diese selbsttätig genau aufeinander. Da die Erweichungstemperatur der Hülse unter der der Lichtleiter liegt, werden die Lichtleiter keiner hohen Wärmebelastung ausgesetzt. Das Abkühlen der Hülse bringt einen weiteren Schrumpfeffekt mit sich, wodurch sich eine sehr feste, nicht lösbare Verbindung ergibt. Da die Hülse weniger gezielt erwärmt werden muß als die Lichtleiterenden beim Verschweißen, genügt eine einfache Heizeinrichtung. Damit ist der Vorrichtungsaufwand erheblich geringer. Die gesamte Vorrichtung kann werkzeugartig mit geringem Raumaufwand ausgebildet werden.

Nach einer Weiterbildung der Erfindung werden die beiden Enden der Hülse von einer Zugzange erfaßt. Als Wärmeeinrichtung empfiehlt sich insbesondere bei außerbetrieblicher Anwendung ein Gasbrenner mit einer ringförmigen Flamme und zwei beiderseitigen Flammblenden. Zusammen mit der Zugzange läßt sich eine solche Vorrichtung in ihrem Arbeitsbereich sehr kompakt ausbilden. Nach Erreichen der Erweichungstemperatur schwenken die Ringflamme und die Flammblende nach außen. Die Backen der Zugzange ziehen daraufhin die Enden der Hülse auseinander, so daß sie sich in ihrer erwärmten Zone einschnürt.

Nach einer anderen Weiterbildung der Erfindung wird die Verbindungsstelle nach dem Aufbringen der Hülse durch eine Versteifungsschiene und einen Schrumpfschlauch geschützt. Eine derartige Versteifungsschiene kann z.B. einen V-förmigen Längsschlitz aufweisen, in den die Hülse eingelegt wird. Der darübergezogene Schrumpfschlauch drückt die Hülse fest in den Längsschlitz, so daß die Gefahr einer mechanischen Beschädigung äußerst gering bleibt.

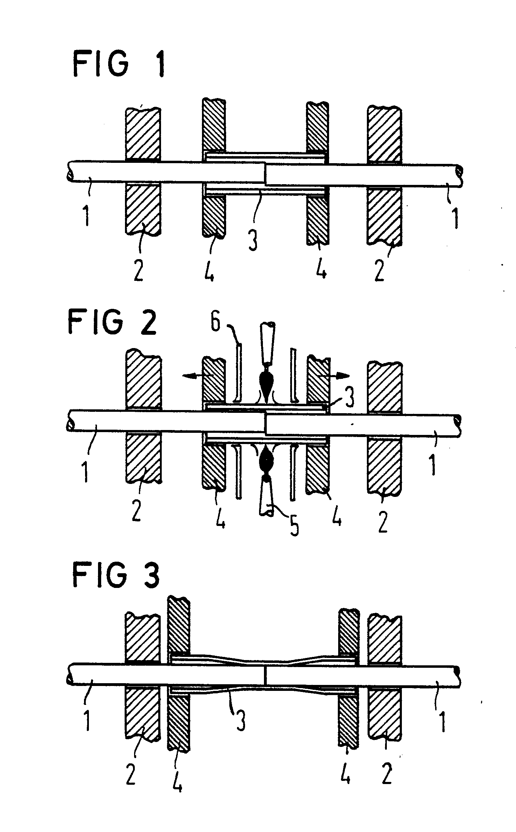

Im folgenden wird die Erfindung anhand eines in der Zeichnung dargestellten Ausführungsbeispieles näher erläutert. Die Fig. 1, 2 und 3 zeigen schematisiert die verschiedenen Phasen der Herstellung einer festen Verbindung zwischen zwei stirnseitig aneinanderstoßenden Lichtleiterenden.

Nach Fig. 1 sind zwei Leichtleiterenden 1 in zwei Haltebacken 2 gehalten, so daß sie stirnseitig aneinanderstoßen. Im Bereich der Stoßstelle ist über die beiden freien Licht leiterenden eine Hülse 3 geschoben, die aus Glas besteht, dessen Erweichungstemperatur erheblich unter der der Lichtleiter liegt. Der Innendurchmesser der Hülse ist größer als der Außendurchmesser der Lichtleiter 1. Diese ist an ihren beiden Enden von Klemmbacken 4 einer Zugzange umgriffen. Die Klemmbacken 4 können in Längsrichtung der Lichtleiter auseinandergezogen werden.

Nach Fig. 2 ist zwischen die Klemmbacken 4 ein ringförmiger Gasbrenner 5 eingebracht. Dieser erwärmt die Hülse 3 im Bereich der Stoßstelle ringförmig auf deren Erweichungstemperatur. Seitliche Flammblenden 6 schützen die Klemmbacken 4 vor zu starker Erwärmung und begrenzen die Länge der Erwärmungszone. Nach Erreichen der Erweichungstemperatur wird der Ringbrenner 5 mit den Flammblenden 6 weggeschwenkt und die Klemmbacken 4 werden auseinandergezogen.

Fig. 3 zeigt die Teile nach Fig. 2 nach Beendigung dieses Vorganges. Durch das Auseinanderziehen der Klemmbacken 4 wurde die Hülse 3 in ihrem erweichten Bereich gestreckt und eingeschnürt. Dadurch legt sie sich eng an die beiden Lichtleiterenden 1 an und zentriert diese zueinander. Dabei wird nicht nur der gegenseitige Versatz ausgeglichen, sondern auch ein Durchmesserunterschied. Beim Abkühlen der Hülse 3 schrumpft diese in ihrem Durchmesser, so daß sie sich fest an die beiden Lichtleiterenden 1 anlegt. Dadurch wird die Verbindung ähnlich stabil wie eine geschweißte Spleißverbindung.

## Ansprüche

1. Verfahren zum festen Verbinden zweier zueinander fluchtender Lichtleiterenden,

**dadurch gekennzeichnet,**

daß über die beiden Lichtleiterenden (1) eine Hülse (3) aus Glas geschoben wird, deren Innendurchmesser größer ist, als der Außendurchmesser der Lichtleiter und deren Erweichungstemperatur erheblich unter der der Lichtleiter (1) liegt und daß die Hülse (3) im Bereich der Verbindungsstelle auf die Erweichungstemperatur erwärmt und in diesem Zustand so weit gestreckt wird, daß sie sich eng an die beiden Lichtleiterenden (1) anlegt.

2. Verfahren nach Anspruch 1,

**dadurch gekennzeichnet,**

daß die beiden Enden der Hülse (3) von den Klemmbacken (4) einer Zugzange erfaßt werden.

3. Verfahren nach Anspruch 1 oder 2,

**dadurch gekennzeichnet,**

daß als Wäremeeinrichtung ein Gasbrenner (5) mit ringförmiger Flamme und zwei beiderseitigen Flammblenden (6) verwendet wird.

4. Verfahren nach Anspruch 1, 2 oder 3,

**dadurch gekennzeichnet,**

daß die Verbindungsstelle nach dem Aufbringen der Hülse (3) durch eine Versteifungsschiene und einen Schrumpfschlauch geschützt wird.

FIG 1

1   2   4   4   2   3

FIG 2

6   3   1   2   4   4   2   5

FIG 3

1   2   4   3   4   2